Europäisches Patentamt

European Patent Office

Office européen des brevets

(11) Numéro de publication : **0 335 307 B1**

# (12) FASCICULE DE BREVET EUROPEEN

(45) Date de publication du fascicule du brevet :
**06.05.92 Bulletin 92/19**

(51) Int. Cl.$^5$ : **F16K 47/04**

(21) Numéro de dépôt : **89105402.5**

(22) Date de dépôt : **28.03.89**

(54) **Vanne numérique.**

(30) Priorité : **31.03.88 FR 8804305**

(43) Date de publication de la demande :
**04.10.89 Bulletin 89/40**

(45) Mention de la délivrance du brevet :
**06.05.92 Bulletin 92/19**

(84) Etats contractants désignés :
**AT BE CH DE ES FR GB IT LI NL**

(56) Documents cités :
**US-A- 3 670 768**
**US-A- 3 937 248**
**US-A- 3 942 553**
**US-A- 4 019 533**

(73) Titulaire : **SOGELERG**
**25, rue du Pont des Halles Chevilly-Larue**
**F-94536 Rungis Cédex (FR)**
Titulaire : **SOCIETE NOUVELLE AUXIM**
**13-15, rue Edouard Martel Z.I. La Chauvetière**
**F-42030 Saint Etienne Cédex (FR)**

(72) Inventeur : **Comte, Gilles**
**4, Square des Aulnes**
**F-77500 Chelles (FR)**
Inventeur : **Viode, André**
**c/o Société Nouvelle Auxim 13, rue Edouard Martel**
**F-42030 Satin-Etienne (FR)**

(74) Mandataire : **Weinmiller, Jürgen et al**
**Lennéstrasse 9 Postfach 24**
**W-8133 Feldafing (DE)**

EP 0 335 307 B1

## Description

La présente invention concerne la commande du débit et/ou de la pression d'un fluide liquide ou gazeux. On connaît des vannes dites numériques qui peuvent être connectées directement à un système de commande électronique purement numérique pour assurer une telle commande de débit.

Une vanne numérique connue comporte les éléments suivants qui sont communs à cette vanne connue et à la vanne selon l'invention :

– un conduit d'entrée disposé selon un axe de vanne pour recevoir d'un côté amont un fluide sous une pression amont, et un conduit de sortie disposé selon le même axe pour laisser sortir ce fluide d'un côté aval sous une pression aval sensiblement plus faible,

– une pluralité d'obturateurs, chacun pour dégager, lorsqu'il est ouvert, un orifice permettant le passage, entre ces conduits d'entrée et de sortie, d'un débit dudit fluide propre à cet obturateur et pour supprimer ce débit lorsqu'il est fermé,

– un corps de vanne formant une pluralité de logements répartis angulairement autour dudit axe de vanne sur une couronne d'obturation de diamètre supérieur à celui d'au moins ledit conduit d'entrée, ces logements recevant chacun un dit obturateur correspondant de manière à connecter lesdits obturateurs en parallèle entre lesdits conduits d'entrée et de sortie pour réaliser une addition des débits des obturateurs ouverts,

– et une pluralité d'actionneurs pour actionner chacun un dit obturateur correspondant.

Dans cette vanne connue des obturateurs à débits propres différents sont adaptés à des logements identiques, ce qui permet d'utiliser un même corps de vanne pour des ensembles d'obturateurs différents, au moins dans certaines limites. Les obturateurs sont répartis angulairement autour de l'axe de vanne parceque cela permet de manière relativement simple, d'une part de loger ces obturateurs et leurs actionneurs, d'autre part d'accéder indépendamment à chacun des ces obturateurs pour le réparer ou le remplacer si nécessaire. Quand à la disposition coaxiale des conduits d'entrée et de sortie, elle facilite l'insertion de la vanne sur une ligne de tuyauterie rectiligne.

Une telle vanne numérique connue est par exemple décrite dans le US-A-3 937 248.

Les débits propres aux divers obturateurs se répartissent généralement, par rapport à un débit unité qui est le débit le plus petit, sur les termes successifs d'une progression géométrique de raison 2, c'est-à-dire, par exemple, 1, 2, 4, 8, 16, 32 etc.. L'addition de tels termes permet en effet d'obtenir tous les nombres entiers de 1 à un nombre maximal, 63 par exemple, avec un nombre minimal de termes. C'est-à-dire qu'une telle répartition des débits des obturateurs présente l'avantage que tous les débits intermédiaires peuvent être obtenus, au débit unité près, avec un nombre minimal d'obturateurs. Mais d'autres répartitions sont possibles et éventuellement plus avantageuses.

Une qualité essentielle de telles vannes peut être appelée l'exactitude de l'addition des débits. Lorsque cette qualité est présente, le débit de la vanne est toujours égal à la somme des débits propres aux obturateurs ouverts quels que soient ces obturateurs et quel que soit leur nombre, le débit propre à un obturateur étant celui qui le traverse lorsqu'il est le seul à être ouvert. Cette qualité disparaît lorsque les flux traversant deux obturateurs ouverts interagissent entre eux de telle sorte que les pressions et/ou vitesse du fluide sont modifiées au voisinage d'un obturateur, qui est alors traversé par un débit actuel différent de son débit propre. Elle peut être plus facilement obtenue si on augmente la différence des pressions entre l'amont et l'aval de la vanne, c'est-à-dire la perte de charge de celle-ci et/ou si on augmente les dimensions de la vanne par rapport aux débits à commander, c'est-à-dire l'encombrement de celle-ci.

Les vannes numériques connues présentent des inconvénients concernant l'un ou l'autre des points suivants :

– coût de fabrication de la vanne
– coût d'adaptation de la vanne à des intervalles de débits différents,
– facilité de séparation des divers modules d'obturation en vue de leur réparation ou de leur changement
– encombrement
– exactitude de l'addition des débits
– perte de charge
– rapidité de commutation entre deux valeurs de débit commandées successivement
– transmission de débits importants.

La présente invention a pour but de manière générale de remédier simplement à de tels inconvénients des vannes numériques connues.

Elle a plus particulièrement pour but de concilier une grande facilité de séparation de chacun des modules d'obturation avec un faible encombrement de la vanne et une addition exacte des débits.

La vanne selon l'invention comporte les éléments communs précédemment mentionnés et elle présente, par rapport à la vanne connue précédemment mentionnée, les caractéristiques suivantes :

– chaque dit logement dans ledit corps de vanne présente la forme d'un angle dièdre rentrant ouvert vers l'extérieur et vers l'amont, un côté de cet angle étant constitué par une paroi d'entrée disposée du côté radialement intérieur dudit obturateur correspondant et s'étendant selon une direction axiale ou oblique vers l'extérieur et selon une direction circonférentielle, et l'autre côté de cet angle étant constitué par une paroi de sortie disposée à l'aval de cet obturateur et s'étendant selon une direction radiale ou oblique vers l'aval et selon une direction circonférentielle,
– chaque dit obturateur est incorporé dans un module d'obturation correspondant qui présente deux faces d'appui formant un angle dièdre saillant de même valeur que ledit angle dièdre rentrant,
– des moyens de fixation de module fixent de manière amovible chaque dit module d'obturation en appui par ses dites faces d'appui contre lesdites parois d'entrée et de sortie de son logement,
– lesdites parois d'entrée et de sortie de chacun desdits logements et ledit module d'obturation correspondant incorporant un dit obturateur forment pour ledit fluide, lorsque cet obturateur est ouvert, un conduit coudé présentant une branche d'entrée sensiblement perpendiculaire à ladite paroi d'entrée et une branche de sortie sensiblement perpendiculaire à ladite paroi de sortie et permettant audit fluide de pénétrer dans une chambre de sortie qui est commune à au moins plusieurs desdits logements et qui communique avec ledit conduit de sortie ou est constituée par celui-ci,
– et des moyens d'étanchéité sont prévus entre lesdites faces d'appui de ce module et lesdites parois de son logement autour desdites branches d'entrée et de sortie.

Ledit angle dièdre peut être tronqué au voisinage de son arête. Son côté d'entrée constitué par une face radialement extérieure de ladite paroi d'entrée peut, en section par un plan axial, être exactement axial ou être incliné, éventuellement jusqu'à 45 degrés, en s'écartant de l'axe vers l'amont. Son côté de sortie constitué par une face amont de ladite paroi de sortie, peut de manière analogue être exactement radial ou s'incliner vers l'aval vers l'extérieur, éventuellement jusqu'à 30 voire même 45 degrés.

Cette disposition simple permet, après suppression de la fixation d'un module d'obturation sur le corps de vanne, d'écarter ce module selon la direction radiale ainsi que , au moins de manière oblique, selon la direction axiale vers l'amont, ceci avec peu d'opérations de démontage et sans frottement contre les joints qui constituent classiquement les moyens d'étanchéité. Et il a été trouvé qu'elle permettait de conserver l'exactitude de l'addition de débits même si certains de ceux-ci étaient importants par rapport aux dimensions de la vanne. En ce qui concerne la chambre de sortie, le plus simple est qu'elle soit commune à tous les secteurs du corps de vanne.

Selon l'invention on peut adopter de plus, dans la mesure où les circonstances s'y prêtent, les dispositions préférées suivantes :
– Lesdites parois d'entrée des logements sont formées à un rayon supérieur à celui dudit conduit d'entrée et un divergent guide ledit fluide de ce conduit à des passages d'entrée formés dans ces parois et faisant partie desdites branches d'entrée. On constitue ainsi, au contact desdites parois d'entrée, une chambre d'entrée commune de dimensions suffisantes pour éviter toute interaction gênante entre les flux qui se dirigent vers les passages d'entrée correspondant aux obturateurs ouverts, et ceci même alors que le conduit d'entrée lui-même présente un petit diamètre. Dans le cas où le fluide traversant la vanne est gazeux, ces dimensions de la chambre d'entrée et ce diamètre du conduit d'entrée peuvent être d'autant plus petits que la pression est grande dans ce conduit.
– Des passages de sortie constituant une partie desdites branches de sortie dans lesdites parois de sortie sont formés à un rayon supérieur à celui dudit conduit de sortie et un convergent guide progressivement vers ce conduit le fluide sortant de ladite chambre de sortie de manière à éviter qu'une interaction entre les flux sortant de plusieurs dits passages de sortie puisse modifier les débits qui traversent lesdits obturateurs. Il est apparu que le risque d'interaction gênante entre les flux qui traversent les divers obturateurs ouverts étaient les plus grands à l'aval des passages de sortie, ce qui entraîne d'une part que le rayon de la chambre de sortie ne peut pas être réduit autant que celui d'une chambre d'entrée, d'autre part que les flux de sortie doivent n'être rassemblés que d'une manière ménagée. Ces flux peuvent notamment être d'abord parallèles les uns aux autres, ou à peu près.
– Une grille de régularisation d'écoulement est disposée dans chaque dite branche de sortie en aval dudit obturateur.
– Chaque dit conduit coudé comporte, à l'intérieur dudit module d'obturation correspondant, un segment interne rectiligne de ladite branche d'entrée, un coude, et un segment interne rectiligne de ladite branche de sortie. Un intérêt de cette disposition est que la fabrication du module est facilitée lorsqu'une fraction relativement importante de la longueur du conduit coudé est constituée de segments rectilignes.
– Chaque obturateur présente un axe d'entrée-sortie disposé sur un dit segment interne de branche de sortie, et comporte un axe de manoeuvre perpendiculaire à cet axe d'entrée-sortie, lesdits actionneurs étant disposés sur ces axes de manoeuvre est étant répartis angulairement sur une couronne d'actionneurs au-delà de ladite couronne d'obturation. Cette disposition permet d'utiliser, pour constituer les obturateurs, des vannes de types connus de fabrication et de calibrage simples, et elle permet de disposer d'un espace important pour les actionneurs.
– Lesdits obturateurs sont des vannes à boisseaux tournant autour desdits axes de manoeuvre et entraînées par lesdits actionneurs par l'intermédiaire de ces axes. Ces vannes sont avantageusement des vannes de type connu à boisseau sphérique et elles permettent de donner à l'obturateur dont le débit propre est le plus grand, un débit important par rapport aux dimensions de la vanne numérique.

– Lesdits actionneurs sont des actionneurs pneumatiques ou hydrauliques alimentés à partir d'un réservoir commun d'air ou autre fluide comprimé et munis chacun d'au moins une électrovanne permettant sa commande par un système de commande numérique électronique. De tels actionneurs permettent d'obtenir à coût modéré une commutation relativement rapide. Si leurs dimensions sont importantes ils sont avantageusement disposés dans ladite couronne d'actionneurs, selon une disposition préférée précédemment mentionnée. Bien entendu un amplificateur électronique peut être prévu entre ledit système de commande électronique et lesdites électrovannes.

Cependant, notamment dans le cas de vannes de petites dimensions, il peut être parfois préférable d'utiliser des actionneurs électriques.

A l'aide des figures schématiques ci-jointes on va décrire plus particulièrement ci-après, à titre d'exemple non limitatif, comment la présente invention peut être mise en oeuvre dans le cadre de l'exposé qui en a été donné ci-dessus. Lorsqu'un même élément est représenté sur plusieurs figures il y est désigné par le même signe de référence. Le mode de mise en oeuvre donné en exemple comporte les dispositions mentionnées ci-dessus comme préférées selon la présente invention. Il doit être compris que les éléments mentionnés peuvent être remplacés par d'autres éléments assurant les mêmes fonctions techniques.

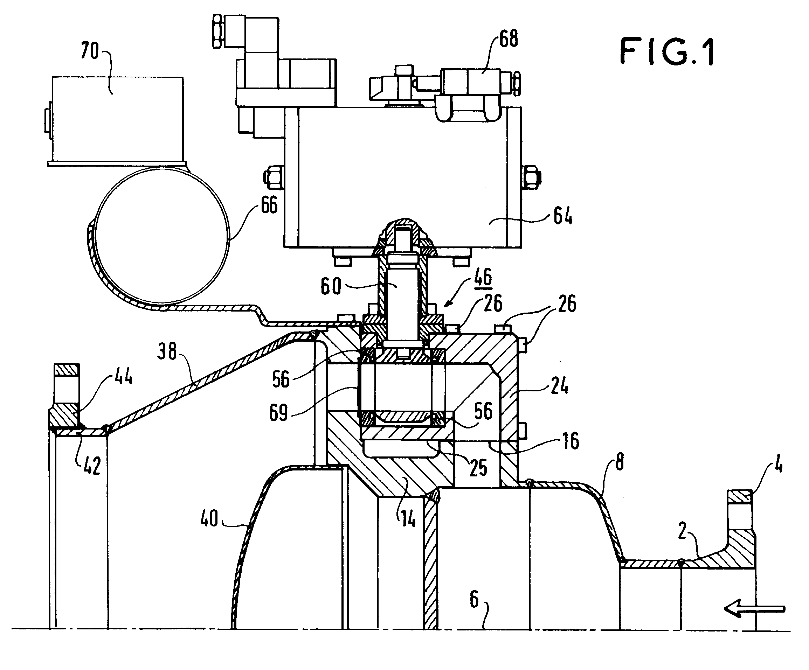

La figure 1 représente une vue en coupe axiale d'une vanne numérique selon l'invention.

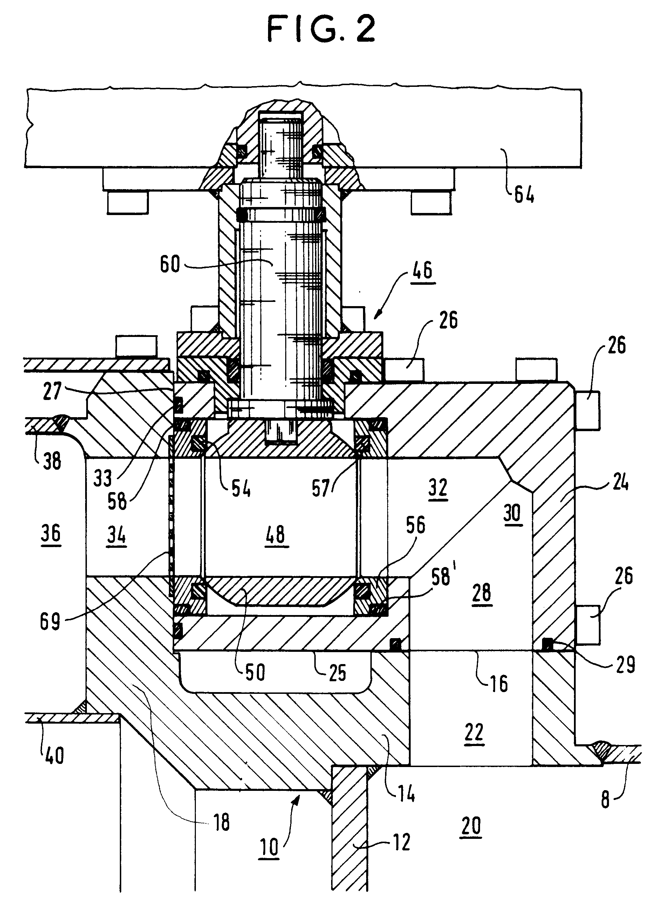

La figure 2 est un agrandissement d'une partie de la figure 1 représentant un obturateur.

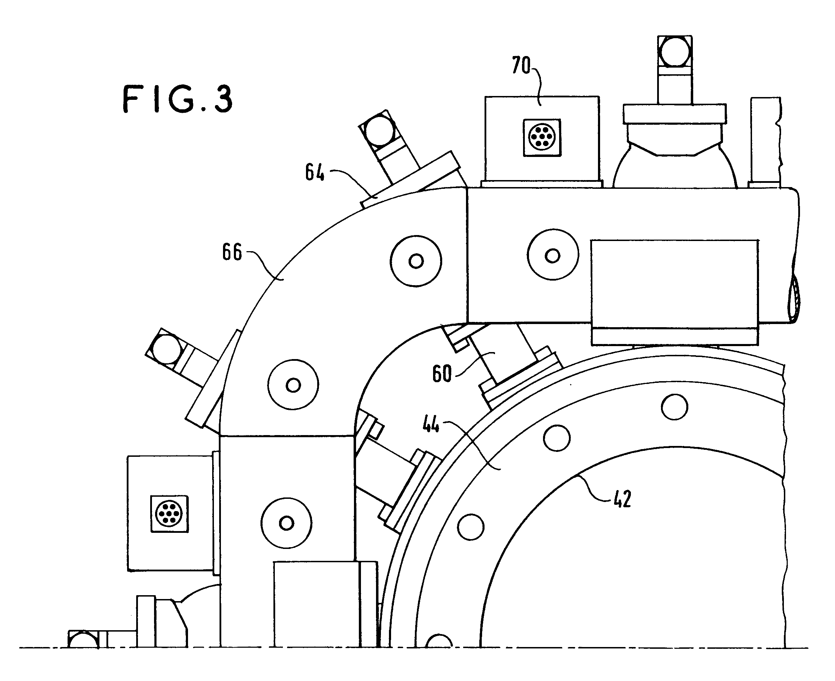

La figure 3 représente une vue du côté aval de cette vanne.

Cette vanne présente un axe 6. Son dit conduit d'entrée 2 est muni d'une bride de raccordement 4 et se raccorde vers l'aval par soudure à un divergent 8 qui est lui-même soudé à un corps de vanne 10. Ce dernier présente la forme générale d'une couronne circulaire dont le trou central est bouché par une plaque d'obturation 12. Des secteurs angulaires successifs de cette couronne comportent chacun une dite paroi d'entrée telle que 14 présentant une face externe place 16 formant méplat, et une dite paroi de sortie 18. Chacun de ces secteurs forme ainsi un dit logement en forme d'angle dièdre, le côté d'entrée de cet angle étant parallèle à l'axe de vanne et le côté de sortie étant perpendiculaire à cet axe. Une chambre d'entrée 20 est formée à l'intérieur de la paroi d'entrée 14 en amont de la plaque d'obturation 12. Un module d'obturation approximativement cubique 24 est fixé, par des vis telles que 26, en appui sur ces parois d'entrée et de sortie, dans le logement formé entre ces parois. Ses dites faces d'appui sont représentées en 25 et 27. La paroi d'entrée 14 est percée d'un dit passage d'entrée radial qui se prolonge par un segment de conduit 28 interne au module 24. Le conduit de fluide comporte ensuite un coude à 90 degrés 30, puis un autre segment de conduit 32 interne au module 24, puis un passage de sortie axial 34 percé dans la paroi de sortie 18. Des joints d'étanchéité toriques 29 et 33 entourent les segments 28 et 32 aux interfaces entre le module 24 et les parois 14 et 18. Tous les passages de sortie tels que 34 débouchent dans une chambre de sortie annulaire commune 36 limitée extérieurement par un convergent 38 et intérieurement par une ogive 40. Le convergent 38 raccorde cette chambre à un conduit de sortie 42 muni d'une bride de raccordement 44.

Le module 24 incorpore un obturateur 46 présentant un orifice 48 disposé sur le segment interne de sortie 22 et percé dans un boisseau sphérique 50. Différents obturateurs, par exemple quatre, présentent un même diamètre de leurs boisseaux sphériques, les orifices percés dans ces boisseaux présentant des diamètres différents selon les débits nominaux de ces obturateurs, le diamètre maximal de ces orifices étant celui de la branche de sortie 32, 34. Une vanne numérique comportant douze obturateurs présente trois diamètres différents de boisseaux sphériques, par exemple. Des joints d'étanchéité sont prévus en 54 entre le boisseau 50 et le corps 56 de la vanne à boisseau, en 58 entre ce corps et le module 24, et en 58 entre ce corps et la paroi 18. Une grille 69 régularise l'écoulement en aval du boisseau 50.

Ce boisseau est entraîné en rotation par un axe de manoeuvre 60 reliant ce boisseau à un actionneur pneumatique 64 alimenté en air comprimé à partir d'un distributeur 66 par l'intermédiaire d'une électrovanne 68. Ce distributeur est un tube qui fait le tour de la vanne à proximité des actionneurs tels que 64. Son diamètre est suffisant pour qu'il constitue un réservoir tampon d'air comprimé. Il est lui-même alimenté par un compresseur non représenté. Plusieurs électrovannes telles que 68 sont commandées par un système électronique commun 70. Lesdites couronnes d'obturation et d'actionneurs sont constitués par les obturateurs tels que 46 et les actionneurs tels que 64 répartis angulairement autour de l'axe 6.

**Revendications**

1. Vanne numérique comportant
– un conduit d'entrée (2) disposé selon un axe de vanne (6) pour recevoir d'un côté amont un fluide sous une pression amont et un conduit de sortie (42) disposé selon le même axe pour laisser sortir ce fluide d'un côté aval sous une pression aval sensiblement plus faible,

– une pluralité d'obturateurs (46), chacun pour dégager, lorsqu'il est ouvert, un orifice (48) permettant le passage, entre ces conduits d'entrée (2) et de sortie (42), d'un débit dudit fluide propre à cet obturateur et pour supprimer ce débit lorsqu'il est fermé,

– un corps de vanne (10) formant une pluralité de logements (14, 18) répartis angulairement autour dudit axe de vanne (6) sur une couronne d'obturation de diamètre supérieur à celui d'au moins ledit conduit d'entrée (2), ces logements (14, 18) recevant chacun un dit obturateur (46) correspondant de manière à connecter lesdits obturateurs (46) en parallèle entre lesdits conduits d'entrée (2) et de sortie (42) pour réaliser une addition des débits des obturateurs ouverts,

– et une pluralité d'actionneurs (64) pour actionner chacun un dit obturateur (46) correspondant, caractérisée en ce que

– chaque dit logement (14, 18) dans ledit corps de vanne (10) présente la forme d'un angle dièdre rentrant ouvert vers l'extérieur et vers l'amont, un côté de cet angle étant constitué par une paroi d'entrée (14) disposée du côté radialement intérieur dudit obturateur correspondant (46) et s'étendant selon une direction axiale ou oblique vers l'extérieur et selon une direction circonférentielle, et l'autre côté de cet angle étant constitué par une paroi de sortie (18) disposée à l'aval de cet obturateur (46) et s'étendant selon une direction radiale ou oblique vers l'aval et selon une direction circonférentielle,

– chaque dit obturateur (46) est incorporé dans un module d'obturation (24) correspondant qui présente deux faces d'appui (25, 27) formant un angle dièdre saillant de même valeur que ledit angle dièdre rentrant,

– des moyens de fixation de module (26) fixent de manière amovible chaque dit module d'obturation (24) en appui par ses dites faces d'appui (25, 27) contre lesdites parois d'entrée (14) et de sortie (18) de son logement,

– lesdites parois d'entrée (14) et de sortie (18) de chacun desdits logements et ledit module d'obturation (24) correspondant incorporant un dit obturateur (46) forment pour ledit fluide, lorsque cet obturateur (46) est ouvert, un conduit coudé (22, 28, 30, 32, 34) présentant une branche d'entrée (22, 28) sensiblement perpendiculaire à ladite paroi d'entrée (14) et une branche de sortie (32, 34) sensiblement perpendiculaire à ladite paroi de sortie (18) et permettant audit fluide de pénétrer dans une chambre de sortie (36) qui est commune à au moins plusieurs desdits logements (14, 18) et qui communique avec ledit conduit de sortie (42) ou est constituée par celui-ci,

– et des moyens d'étanchéité (29, 33) sont prévus entre lesdites faces d'appui (25, 27) de ce module (24) et lesdites parois (14, 18) de son logement autour desdites branches d'entrée (22, 28) et de sortie (32, 34).

2. Vanne selon la revendication 1, caractérisée en outre par le fait que lesdites parois d'entrée (14) des logements (14, 18) sont formées à un rayon supérieur à celui dudit conduit d'entrée (2) et un divergent (8) guide ledit fluide de ce conduit (2) à des passages d'entrée (22) formés dans ces parois (14) et faisant partie desdites branches d'entrée (22, 28).

3. Vanne selon la revendication 1, caractérisée en outre par le fait que des passages de sortie (34) constituant une partie desdites branches de sortie (32, 34) dans lesdites parois de sortie (18) sont formés à un rayon supérieur à celui dudit conduit de sortie (42) et un convergent (38) guide progressivement vers ce conduit le fluide sortant de ladite chambre de sortie (36) de manière à éviter qu'une interaction entre les flux sortant de plusieurs dits passages de sortie puisse modifier les débits qui traversent lesdits obturateurs.

4. Vanne selon la revendication 1, caractérisée en outre par le fait qu'une grille de régularisation d'écoulement (69) est disposée dans chaque dite branche de sortie (32, 34) en aval dudit obturateur (46).

5. Vanne selon la revendication 1, caractérisée en outre par le fait que chaque dit conduit coudé (22, 28, 30, 32, 34) comporte, à l'intérieur dudit module d'obturation correspondant (24), un segment interne rectiligne (28) de ladite branche d'entrée (22, 28), un coude (30), et un segment interne rectiligne (32) de ladite branche de sortie (32, 34).

6. Vanne selon la revendication 5, caractérisée en outre par le fait que chaque dit obturateur (46) présente un axe d'entrée-sortie disposé sur un dit segment interne (32) de branche de sortie, et comporte un axe de manoeuvre (60) perpendiculaire à cet axe d'entrée-sortie, lesdits actionneurs (64) étant disposés sur ces axes de manoeuvre (60) et étant répartis angulairement sur une couronne d'actionneurs au-delà de ladite couronne d'obturation.

7. Vanne selon la revendication 6, caractérisée en outre par le fait que lesdits obturateurs (46) sont des vannes à boisseaux tournant autour desdits axes de manoeuvre (60) et entraînées par lesdits actionneurs (64) par l'intermédiaire de ces axes.

8. Vanne selon la revendication 6, caractérisée en outre par le fait que lesdits actionneurs (64) sont des actionneurs pneumatiques ou hydrauliques alimentés à partir d'un réservoir commun d'air ou autre fluide comprimé (66) et munis chacun d'au moins une électrovanne (68) permettant sa commande par un système de commande numérique électronique (70).

## Patentansprüche

1. Digital gesteuertes Ventil mit:
– einem Eintrittskanal (2), der entlang einer Ventilachse (6) angeordnet ist, um eingangsseitig ein unter dem dort herrschenden Druck stehendes Fluid zu empfangen und mit einem Austrittskanal (42), der entlang der gleichen Achse angeordnet ist, um das Fluid ausgangsseitig unter einem dort herrschenden, wesentlich niedrigeren Druck entweichen zu lassen,
– einer Vielzahl von Verschlüssen (46), welche den Durchtritt einer dem jeweiligen Verschluß entsprechenden Durchflußmenge des Fluids zwischen dem Eintrittskanal (2) und dem Austrittskanal (42) ermöglicht und in der Schließstellung den Durchfluß unterbindet,
– einem Ventilkörper (10), der eine Vielzahl von Aufnahmekammern (14, 18) aufweist, die in Winkelabständen um die Achse des Ventils (6) auf einem Verschlußkranz mit einem Durchmesser angeordnet sind, der größer ist als zumindest derjenige des Eintrittskanals (2), wobei die Kammern (14, 18) je einen entsprechenden Verschluß (46) aufnehmen, derart, daß die Verschlüsse (46) parallel zwischen den Eintrittskanal (2) und den Austrittskanal (42) geschaltet sind, um eine Summierung der Durchflußmengen der geöffneten Verschlüsse herbeizuführen,
– und einer Vielzahl von Betätigungsorganen (64), die je einen entsprechenden Verschluß betätigen,
dadurch gekennzeichnet, daß
– jede Aufnahmekammer (14, 18) im Ventilkörper (10) die Form eines zurückspringenden Diederwinkels bildet, der nach außen hin und in Eingangsrichtung offen ist, wobei eine Seite dieses Winkels aus einer Eintrittswand (14) besteht, die radial an der Innenseite des entsprechenden Verschlusses (46) angeordnet ist und sich in einer axialen oder schräg verlaufenden Richtung zur Außenseite hin sowie in einer Umfangsrichtung erstreckt, während die andere Seite des Winkels aus einer Austrittswand (18) besteht, die hinter dem betreffenden Verschluß (46) angeordnet ist und sich in einer radialen oder schräg verlaufenden Richtung zur Ausgangsseite hin sowie in einer Umfangsrichtung erstreckt,
– jeder Verschluß (46) in einen entsprechenden Verschlußmodul (24) eingebaut ist, der zwei Anliegeflächen (25, 27) besitzt, die einen um den gleichen Wert vorspringenden Diederwinkel bilden wie der zurückspringende Diederwinkel,
– Modulbefestigungsmittel (26) jeden der mit seinen Anliegeflächen (25, 27) gegen die Eintrittswand (16) und die Austrittswand (18) seiner Aufnahmekammer anliegenden Verschlußmodule (24) fixieren,
– wobei die Eintrittswand (14) und die Austrittswand (18) jeder Kammer sowie der entsprechende Verschlußmodul (24) mit seinem Verschluß (46) im geöffneten Zustand für das Fluid einen gekrümmten Kanal (22, 28, 30, 32, 34) bilden, welcher einen im wesentlichen senkrecht zur Eintrittswand (14) verlaufenden senkrechten Eintrittszweig (22, 28) und einen im wesentlichen senkrecht zur Austrittswand (18) verlaufenden Austrittszweig (32, 34) aufweist und der dem Fluid das Eindringen in eine mindestens mehreren Aufnahmekammern (14, 18) gemeimsame Austrittskammer ermöglicht, die mit dem Austrittskanal (42) in Verbindung steht oder von diesem gebildet ist,
– und daß Dichtungsmittel (29, 33) zwischen den Anliegeflächen (25, 27) des Moduls (24) und den Wänden (14, 18) seiner Aufnahmekammer um die Eintrittszweige (22, 28) und die Austrittszweige (32, 34) herum angebracht sind.

2. Ventil nach Anspruch 1, dadurch gekennzeichnet, daß die Eintrittswände (14) der Aufnahmekammern (14, 18) einen Halbmesser besitzen, der größer als derjenige der Eintrittskanäle (2) ist und ein Trichterelement (8) das Fluid des Kanals (2) Eintrittsdurchgängen (22) zuführt, die in diesen Wänden (14) angebracht sind und Teil der Eintrittszweige (22, 28) sind.

3. Ventil nach Anspruch 1, dadurch gekennzeichnet, daß die einen Teil der Austrittszweige (33, 34) in den Austrittswänden (18) bildenden Austrittsdurchgänge (34) einen Halbmesser besitzen, der größer als derjenige des Austritts (42) ist, und daß ein Sammler (38) das aus der Austrittskammer (36) austretende Fluid allmählich zum Austritt (42) führt, so daß verhindert wird, daß eine Wechselwirkung zwischen den aus mehreren Austrittsdurchgängen (34) austretenden Flüssen die Gesamtfluidmenge verändert, welche durch die Verschlüsse fließt.

4. Ventil nach Anspruch 1, dadurch gekennzeichnet, daß hinter dem Verschluß (46) ein Strömungsreguliergitter (69) in jedem Austrittszweig (32, 34) angeordnet ist.

5. Ventil nach Anspruch 1, dadurch gekennzeichnet, daß jeder gekrümmte Kanal (22, 28, 30, 32, 34) im Inneren des entsprechenden Verschlußmoduls (24) ein gerades inneres Segment (28) des Eintrittszweiges (22, 28), einen Krümmer (30) und ein gerades inneres Segment (32) des Austrittszweiges (32, 34) aufweist.

6. Ventil nach Anspruch 5, dadurch gekennzeichnet, daß jeder Verschluß (46) eine Eintritts-Austrittsachse, die in einem inneren Segment (32) des Austrittszweiges verläuft, und eine Verstellachse (60) aufweist, die senkrecht zur Eintritts-Austrittsachse verläuft, wobei die Betätigungsorgane (64) auf diesen Verstellachsen (60) angebracht und in Winkelabständen über einen Betätigungskranz verteilt sind, der weiter außerhalb des Verschlußkranzes angeordnet ist.

7. Ventil nach Anspruch 6, dadurch gekennzeichnet, daß die Verschlüsse (46) als Stopfenventile ausgebildet sind, die sich um die Verstellachsen (60) drehen und durch die Betätigungsorgane (64) über diese Achsen bewegt werden.

8. Ventil nach Anspruch 6, dadurch gekennzeichnet, daß die Betätigungsorgane (64) pneumatische oder hydraulische Antriebe sind, die von einem gemeinsamen Speicher (66) mit unter Druck stehender Luft oder einem sonstigen komprimierten Fluid gespeist werden und von denen jeder mit mindestens einem Elektroventil (68) ausgerüstet ist, das durch ein elektronisches digitales Steuersystem (70) steuerbar ist.

## Claims

1. A digital valve comprising:
– an inlet duct (2) disposed on a valve axis (6) in order to receive a fluid at an upstream pressure via an upstream side, and an outlet duct (42) disposed on the same axis in order to allow said fluid to leave via a downstream side under a downstream pressure which is substantially smaller;
– a plurality of shutters (46), each serving, when open, to disengage an orifice (48) allowing a flow of said fluid to pass from said inlet duct (2) to said outlet duct (42) at a rate which is individual to said shutter, and serving, when closed, to prevent said flow;
– a valve body (10) forming a plurality of seatings (14, 18) angularly distributed around said valve (6) on a ring of shutters, with the diameter of the ring being greater than the diameter of said inlet duct (2), at least, said seatings (14, 18) each receiving a corresponding one of said shutters (46) in such a manner as to connect said shutters (46) in parallel between said inlet duct (2) and said outlet duct (42) so that the flows through open shutters are added together; and
– a plurality of actuators (64) each for actuating a corresponding one of said shutters (46); the digital valve being
characterized in that:
– each of said seatings (14, 18) in said valve body (10) is in the form of a re-entrant dihedral angle open outwardly and in the upstream direction, one side of said angle being constituted by an inlet wall (14) disposed on the radially inner side of the corresponding one of said shutters (46) and extending along a circumferential direction and along a direction which is axial or outwardly oblique, and the other side of said angle being constituted by an outlet wall (18) disposed downstream from said shutter and extending along a circumferential direction and along a direction which is radial or oblique towards the downstream direction;
– each of said shutters (46) is incorporated in a corresponding shutter module (24) having two bearing faces (25, 27) forming a projecting dihedral angle of the same value as said re-entrant dihedral angle;
– module fixing means (26) removably fix each of said shutter modules (24) to bear via said bearing faces (25, 27) against said inlet and outlet walls (14 resp. 18) of its seating;
– said inlet and outlet (14 resp. 18) of each of said seatings and said corresponding shutter module (24) incorporating one of said shutters (46), form, for said fluid, when said shutter (46) is open, a bent duct (22, 28, 30, 32, 34) having an inlet branch (22, 28) substantially perpendicular to said inlet wall (14) and an outlet branch (33, 34) substantially perpendicular to said outlet wall (18), enabling said fluid to penetrate into an outlet chamber (36) which is common to at least a plurality of said seatings (14, 18), and which communicates with said outlet duct (42) or is constituted thereby; and
– sealing means (29, 33) provided between said bearing faces (25, 27) of said module (24) and said walls (14, 18) of its seating around said inlet and outlet branches (22, 28 resp. 32, 34).

2. A valve according to claim 1, further characterized in that the inlet walls (14) of the seatings (14, 18) are formed at a radius greater than the radius of said inlet duct (2), and that a divergent tube (8) guides said fluid from said duct (2) to inlet passages (22) formed through said walls (14) and forming portions of said inlet branches (22, 28).

3. A valve according to claim 2, further characterized in that the outlet passages (34) constituting portions of said outlet branches (32, 34) through said outlet walls (18) are formed at a radius which is greater than the radius of said duct (42), and a convergent tube (38) guides the fluid leaving said outlet chamber (36) progressively towards said duct (42) in such a manner as to prevent interaction occurring between the flows leaving a plurality of said outlet passages (34), since such interaction could have the effect of modifying the flow rates passing through said shutters.

4. A valve according to claim 1, further characterized in that a flow-regularizing grille (69) is disposed in each of said outlet branches (32, 34) downstream from said shutter (46).

5. A valve according to claim 1, further characterized in that inside each of said shutter modules (24), said bent duct (22, 28, 30, 32, 34) comprises a rectilinear inside segment (28) of said inlet branch (22, 28), a bend (30), and an rectilinear inside segment (32) of said outlet branch (32, 34).

6. A valve according to claim 5, further characterized in that each of said shutters (46) has an inlet-outlet axis disposed on one of said inside segments (32) of the outlet branch, and includes an actuator shaft (60) perpendicular to said inlet/ outlet axis, said actuators (64) being disposed on said actuator shafts (60) and being angularly distributed around a ring of actuators outside said ring of shutters.

7. A valve according to claim 6, further characterized in that said shutters (46) are plug valves rotating about said actuator shafts (60) and driven by said actuators (64) via said shafts.

8. A valve according to claim 6, further characterized in that said actuators (64) are pneumatic or hydraulic actuators powered from a common supply (66) of compressed air or other compressed fluid, and each provided with at least one electrically controlled valve (68) enabling it to be controlled by an electronic digital control system (70).

FIG.1

EP 0 335 307 B1

# FIG. 2

FIG.3

EP 0 335 307 B1